**Europäisches Patentamt**

**European Patent Office**

**Office européen des brevets**

(11) Veröffentlichungsnummer: **0 078 429**
**A2**

# (12) EUROPÄISCHE PATENTANMELDUNG

(21) Anmeldenummer: 82109549.4

(22) Anmeldetag: 15.10.82

(51) Int. Cl.³: **B 26 D 9/00**

(30) Priorität: 03.11.81 DE 8132018 U

(43) Veröffentlichungstag der Anmeldung: 11.05.83
Patentblatt 83/19

(84) Benannte Vertragsstaaten: **AT BE CH DE FR GB IT LI NL SE**

(71) Anmelder: **Werner H. K. Peters Maschinenfabrik GmbH,**
**Rondenbarg 15-17, D-2000 Hamburg 54 (DE)**

(72) Erfinder: **Schommler, Manfred, Kiefernhain 18,**
**D-2085 Quickborn-Heide (DE)**
Erfinder: **Dirks, Arthur, Wildacker 11,**
**D-2000 Hamburg 54 (DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Neuer Wall 41, D-2000 Hamburg 36 (DE)**

(54) **Maschine zum Längsschneiden und -rillen einer Materialbahn, insbesondere Wellpappe.**

(57) Maschine zum Längsschneiden und -rillen einer kontinuierlich ohne Unterbrechung zulaufenden Materialbahn, insbesondere Wellpappe, mit einem Kurzquerschneider und einer nachgeordneten Längsschneid- und Rilleinrichtung, die mindestens zwei in unterschiedlicher Höhe angeordnete und höhenverstellbare Längsschneid- und Rilleinheiten mit getrennten Schneid- und Rillwerkzeugen enthält, denen die Vorderkante der vom Kurzquerschneider durchtrennten Materialbahn wahlweise zuführbar ist, wobei die Längsschneid- und Rilleinheiten in Arbeitsrichtung hintereinander liegen, oberhalb der unteren und unterhalb der oberen Längsschneid- und Rilleinheit eine Bahnführung mit der zugeordneten Einheit verbunden ist dergestalt, daß jeweils die Bahnführung einer Einheit ständig mit der Bearbeitungsebene der anderen Einheit ausgerichtet ist und die Längsschneid- und Rilleinheiten zur synchronen Höhenverstellung gekoppelt sind.

PATENTANWÄLTE
DR.-ING. H. NEGENDANK (-1973)

HAUCK, SCHMITZ, GRAALFS, WEHNERT, DÖRING

HAMBURG    MÜNCHEN    DÜSSELDORF

0078429

PATENTANWÄLTE · NEUER WALL 41 · 2000 HAMBURG 36

Werner H.K. Peters
Maschinenfabrik GmbH

Rondenbarg 15-17

2000 Hamburg 54

Dipl.-Phys. W. SCHMITZ · Dipl.-Ing. E. GRAALFS
Neuer Wall 41 · 2000 Hamburg 36
Telefon + Telecopier (040) 36 67 55
Telex 02 11 769 inpat d

Dipl.-Ing. H. HAUCK · Dipl.-Ing. W. WEHNERT
Mozartstraße 23 · 8000 München 2
Telefon + Telecopier (089) 53 92 36
Telex 05 216 553 pamu d

Dr.-Ing. W. DÖRING
K.-Wilhelm-Ring 41 · 4000 Düsseldorf 11
Telefon (02 11) 57 50 27

-1-

ZUSTELLUNGSANSCHRIFT / PLEASE REPLY TO:        HAMBURG,  14. Oktober 1982

Maschine zum Längsschneiden und -rillen

einer Materialbahn, insbesondere Wellpappe
------------------------------------------------

Die Neuerung bezieht sich auf eine Maschine zum Längsschneiden und -rillen einer kontinuierlich ohne Unterbrechung zulaufenden Materialbahn, insbesondere Wellpappe, mit einem Kurzquerschneider und einer nachgeordneten Längsschneid- und Rilleinrichtung, die mindestens zwei in unterschiedlicher Höhe angeordnete und höhenverstellbare Längsschneid- und Rilleinheiten mit getrennten Schneid- und Rillwerkzeugen enthält, denen die Vorderkante der vom Kurzquerschneider durchgetrennten Materialbahn wahlweise zuführbar ist.

Eine derartige Maschine ist bekannt (DE-AS 2 306 296). Die Schneid- und Rillstationen sind innerhalb von im Viereck

.../2

angeordneten Ständern geführt und übereinander angeordnet. Die Vorderkante der vom Kurzquerschneider durchtrennten Materialbahn wird mit Hilfe einer verstellbaren Führungseinrichtung wahlweise einer der beiden Längsschneid- und Rillstationen zugeführt. Zwecks Formatwechsel werden die Schneid- und Rillstationen von einer Arbeitsstellung in ihre Ruhestellung gefahren. Die bekannte Maschine ist jedoch mit einigen Nachteilen behaftet. Da jede Schneid- und Rillstation ihre eigene Arbeitsebene hat, wird die Materialbahn mehr oder weniger stark umgelenkt, was ungünstige Materialbeanspruchungen während des Produktionsablaufes zur Folge haben kann. Darüber hinaus ist es außerordentlich schwierig, bei voller Produktionsgeschwindigkeit einen Formatwechsel ohne Abfall vorzunehmen. In einem solchen Fall muß die umschaltbare Führungseinrichtung genau zu dem Zeitpunkt betätigt werden, an dem das hintere Ende der abgetrennten Bahn sie gerade verlassen und die Vorderkante des neuen Bahnabschnittes noch nicht die starre Führung der bisher arbeitenden Schneid- und Rillstation erreicht hat. Jede Abweichung von diesem Zeitpunkt führt zu einem diskontinuierlichen Übergang.

Es ist ferner eine Maschine zum Längsschneiden und Längsrillen von Materialbahnen bekannt geworden, bei der die Längsschneid- und Rillstationen an den Enden einer etwa mittig schwenkbar gelagerten Hebelanordnung gehalten sind (DE-PS 27 22 233).

Wegen des vorhandenen Lastenausgleichs läßt sich mit Hilfe
einer geeigneten Verstellvorrichtung eine schnelle Verstellung der Schneid- und Rillstationen in die Arbeits- bzw.
Ruhestellung bewirken. Die fest zwischen den Stationen angeordneten Leiteinrichtungen werden automatisch mitverschwenkt
und bleiben stets zueinander ausgerichtet, so daß zusätzliche Verstellvorrichtungen zur Betätigung der Leitvorrichtungen nicht erforderlich sind. Die jeweils im Betrieb befindliche Schneid- und Rillstation arbeitet stets in der
gleichen Arbeitsebene. Dadurch ergeben sich sehr günstige
Materialbeanspruchungen während des Produktionsablaufes.
Nachteilig ist hingegen, daß bei einer Anordnung auf einer
Wippe Schneid- und Rillwerkzeuge jeweils auf einer einzigen
Welle sitzen.      Aus vielerlei Gründen ist die gemeinsame
Anordnung von Schneid- und Rillwerkzeugen auf einer einzigen
Welle unerwünscht.

Der Neuerung liegt die Aufgabe zugrunde, eine Maschine zum
Längsschneiden und -rillen einer kontinuierlich ohne Unterbrechung zulaufenden Materialbahn, insbesondere Wellpappe,
zu schaffen, die eine Bearbeitung der Materialbahn ohne
merkliche mechanische Beanspruchung mit getrennten Werkzeugen für das Schneiden und Rillen ermöglicht.

Diese Aufgabe wird bei einer Maschine der eingangs genannten
Art dadurch gelöst, daß die Längsschneid- und Rilleinheiten in Arbeitsrichtung hintereinander liegen, oberhalb der unteren und unterhalb der oberen Längsschneid- und Rilleinheit eine Bahnführung mit der zugeordneten Einheit verbunden ist dergestalt, daß jeweils die Bahnführung einer Einheit ständig mit der Bearbeitungsebene der anderen Einheit ausgerichtet ist und die Längsschneid- und Rilleinheiten zur synchronen Höhenverstellung gekoppelt sind.

Die neuerungsgemäße Maschine verzichtet auf eine umschaltbare Führungseinrichtung. Dies nicht zuletzt, weil die Bearbeitungsebenen der Schneid- und Rilleinheiten im Einsatz jeweils in eine einzige Arbeitsebene gebracht werden. Bei der Neuerung ist von der Erkenntnis ausgegangen worden, daß vor einem Formatwechsel beide Schneid- und Rilleinheiten in einer Richtung höhenverstellt werden können, so daß sich die vorher in Ruhe befindliche Schneid- und Rilleinheit der Arbeitsebene nähert. Gleichzeitig entfernt sich die noch in Betrieb befindliche Schneid- und Rilleinheit von der Arbeitsebene, was zu einer gewissen, allerdings vorübergehenden Auslenkung der Materialbahn führt. In dem Augenblick, in dem der Kurzquerschneider die Materialbahn durchtrennt, kann die neue Schneid- und Rilleinheit rasch in die Arbeitsebene gefahren werden, während das Ende der ablaufenden Materialbahn unter leichter Auslenkung aus der vorher im Betrieb befindlichen Schneid- und Rilleinheit ausläuft. Die vordere Kante der abgetrennten Materialbahn braucht lediglich in der gleichen Ebene weitergeführt zu werden, um nunmehr in die Bearbeitungsebene der neuen Schneid- und Rilleinheit zu .gelangen.

Auf diese Weise ist es möglich, einen sogenannten Permanentlauf in einer einzigen Arbeitsebene.auch für auf getrennten Wellen angeordnete Rill- und Schneidwerkzeuge durchzuführen. Die den Schneid- und Rilleinheiten zugehörigen Führungen sind dabei so angeordnet, daß eine Auslenkung der Materialbahn während des Formatwechsel lediglich in geringem Ausmaß erfolgt, welche zu keiner nennenswerten Materialbeanspruchung führt.

Nach einer Ausgestaltung der Neuerung ist vorgesehen, daß die Längsschneid- und Rilleinheiten im Maschinenrahmen angeordnet sind, die einander unmittelbar benachbart sind. Auf diese Weise wird eine kompakte Maschine erhalten. Besondere Führungen zwischen aufeinanderfolgenden Schneid- und Rilleinheiten können in Wegfall kommen.

Nach einer weiteren Ausgestaltung der Neuerung ist vorgesehen, daß vor der vorderen Längsschneid- und Rilleinheit eine feste, zur Bearbeitungsebene der Werkzeuge ausgerichtete Führung mit der Einheit verbunden ist. Die Führung dient dazu, den Einlauf der Vorderkante einer abgeschnittenen Materialbahn zu erleichtern, wenn die zugehörige Schneid-und Rilleinheit in Arbeitsposition gebracht ist.

Eine weitere Ausgestaltung der Neuerung sieht vor, daß am Ausgang der hinteren Längsschneid- und Rilleinheit zwei Walzenpaare angeordnet sind, wobei der Spalt eines Walzenpaares zur Bearbeitungsebene der Einheit und der Spalt des anderen Walzenpaares zur Ebene der zugeordneten Bahnführung ausgerichtet ist. Die Walzenpaare dienen zur Führung und zum Abziehen der bearbeiteten Materialbahn, um diese zu einer Querschneidevorrichtung zu transportieren. Die Walzenpaare werden mit der hinteren Einheit mitverstellt, wobei jeweils nur ein Paar im normalen Betrieb in Einsatz ist.

Um den Verstellweg im Fall eines Formatwechsels klein zu halten, sieht eine weitere Ausgestaltung der Neuerung vor, daß der Abstand zwischen der Bearbeitungsebene der Längsschneid- und Rilleinheiten etwas größer ist als der Durchmesser der Schneid- und Rillwerkzeuge. Dadurch wird ein verhältnismäßig kleiner Verstellweg erhalten, der seinerseits eine rasche Verstellung der Schneid- und Rilleinheiten in die Arbeits- bzw. Ruheposition ermöglicht und damit einen Permanentlauf, ohne daß die Materialbahn abgebremst werden muß oder daß bestimmte Mengen vom Kurzquerschneider herausgeschnitten werden müssen.

Insbesondere bei maschinell auf den Wellen verstellbaren
Schneid- und Rillwerkzeugen ist der Mindestabstand zwischen
benachbarten Werkzeugen begrenzt. Häufig müssen jedoch Rilllinien mit einem geringeren Abstand geformt werden als der
erwähnte Mindestabstand. Daher sieht eine weitere Ausgestaltung der Neuerung vor, daß eine höhenverstellbare Rilleinheit der vorderen Längs- und Rilleinheit vorgeordnet ist,
deren Bearbeitungsebene zu einer Bearbeitungsebene der beiden Längsschneid- und Rilleinheiten ausgerichtet ist. Soll
die zusätzliche Rilleinheit zum Einsatz kommen, muß ihre
Höhenverstellung mit der der anderen Rilleinheiten gekoppelt
werden.

Für die Lagerung und Verstellung der Schneid- und Rillwerkzeuge sind verschiedene Möglichkeiten denkbar. Eine besteht
darin, lediglich die Wellenlager höhenverstellbar zu machen.
Eine andere Möglichkeit besteht neuerungsgemäß darin, daß
die Längsschneid- und Rilleinheiten an einem gemeinsamen
Gestell gelagert sind, das mittels einer Hubvorrichtung
höhenverstellbar ist. Alle Werkzeugwellen können mit einer
derartigen Maschine in festen Drehlagern gelagert werden,
und es ist lediglich eine einzige Hubvorrichtung notwendig,
um die Schneid- und Rilleinheiten wahlweise zum Einsatz zu
bringen. Um einen einwandfreien Permanentlauf zu gewährleisten, ist indessen erforderlich, daß die Hubvorrichtung
ausreichend leistungsfähig ist, innerhalb sehr kurzer Zeit

0078429

den Verstellweg für einen Formatwechsel zu bewältigen.

Im Zusammenhang mit der zuletzt erwähnten Ausführung sieht eine weitere Ausgestaltung der Neuerung vor, daß Schneid- und Rillwerkzeuge der oberen Einheit in Arbeitsrichtung beabstandet sind und die Schneid- und Rillwerkzeuge der unteren Einheit zwischen diesen angeordnet sind.

Ausführungsbeispiele der Neuerung werden nachfolgend anhand von Zeichnungen näher erläutert.

Fig. 1  zeigt in Seitenansicht schematisch eine erste Ausführungsform einer Maschine nach der Neuerung.

Fig. 2  zeigt schematisch die Seitenansicht einer zweiten
        Ausführungsform einer Maschine nach der Neuerung.

Fig. 3  zeigt schematisch eine Abwandlung einer Maschine
        nach Fig. 3.

Bevor auf die in den Zeichnungen dargestellten Einzelheiten näher eingegangen wird, sei vorangestellt, daß jedes der beschriebenen und gezeigten Merkmale für sich oder in Verbindung mit Merkmalen der Ansprüche von neuerungswesentlicher Bedeutung ist.

In einem allgemein mit 10 bezeichneten Maschinengestell sind zwei Längsschneid- und Rillstationen 11 und 12 vorgesehen mit jeweils einer Längsschneid- und Rilleinheit 13 bzw. 14. Die Schneid- und Rilleinheit besteht aus einem Schneidwellenpaar 15 und einem Rillwellenpaar 16. Sie sind in bekannter Weise aufgebaut und bestehen im wesentlichen aus einer Welle und auf der Welle angeordneten Kreiswerkzeugen zum Schneiden und Rillen. Die Werkzeuge können in bekannter Weise relativ zueinander und relativ zur Welle verstellt werden. Dies ist in der Zeichnung ebenfalls nicht dargestellt. Die Schneid- und Rilleinheit 14 besteht aus einem Schneidwellenpaar 18 und einem Rillwellenpaar 17. Ihr Aufbau entspricht dem Aufbau der Wellenpaare 16 und 15.

Die Wellenpaare 15, 16 sind höhenverstellbar in einer Rahmenanordnung 19 gelagert. Lagerkonstruktion sowie Hubvorrichtung zur Höhenverstellung sind ebenfalls nicht dargestellt. Wie ersichtlich, befinden sich die Wellenpaare 15, 16 in der am weitesten nach oben ausgefahrenen Position. In der untersten Stellung befinden sie sich innerhalb der Aufnahmeräume 20 bzw. 21 des Rahmens 19. Dieser Zustand ist für die Wellenpaare 17, 18 gezeigt, die mit Hilfe einer geeigneten, nicht gezeigten, Hubvorrichtung höhenverstellbar in einem Rahmen 22 gelagert sind. Die Aufnahmeräume sind mit 23 bzw. 24 bezeichnet. Dem Rahmen 19 sind Verstellvorrichtungen 25 bis 30 zugeordnet (nur schematisch dargestellt),

0078429

die in der unteren Position der Werkzeugwellen 15, 16 eine Verstellung der Werkzeuge auf den Wellen bewirken zwecks Formatwechsels. Analog sind im Rahmen 22 Verstellvorrichtungen 31 bis 36 angeordnet.

Mit der Lagerung für die Werkzeugwellen 15, 16 ist eine obere Bahnführung 37 verbunden. Entsprechend ist mit den Werkzeugwellen 17, 18 eine untere Bahnführung 38 gekoppelt. Eine Führung 39 befindet sich zwischen den Werkzeugwellen 15, 16. Schließlich befindet sich eine Führung 40, die zu der Bearbeitungsebene der Werkzeugwellen 15, 16 ausgerichtet ist und mit diesen ebenfalls gemeinsam verstellt wird vor der vorderen Einheit 13.Gemeinsam mit den Werkzeugwellen 15,16 wird auch eine Führung 41 hinter dem Werkzeugwellenpaar 16, die ständig mit der Führung 38 ausgerichtet ist.

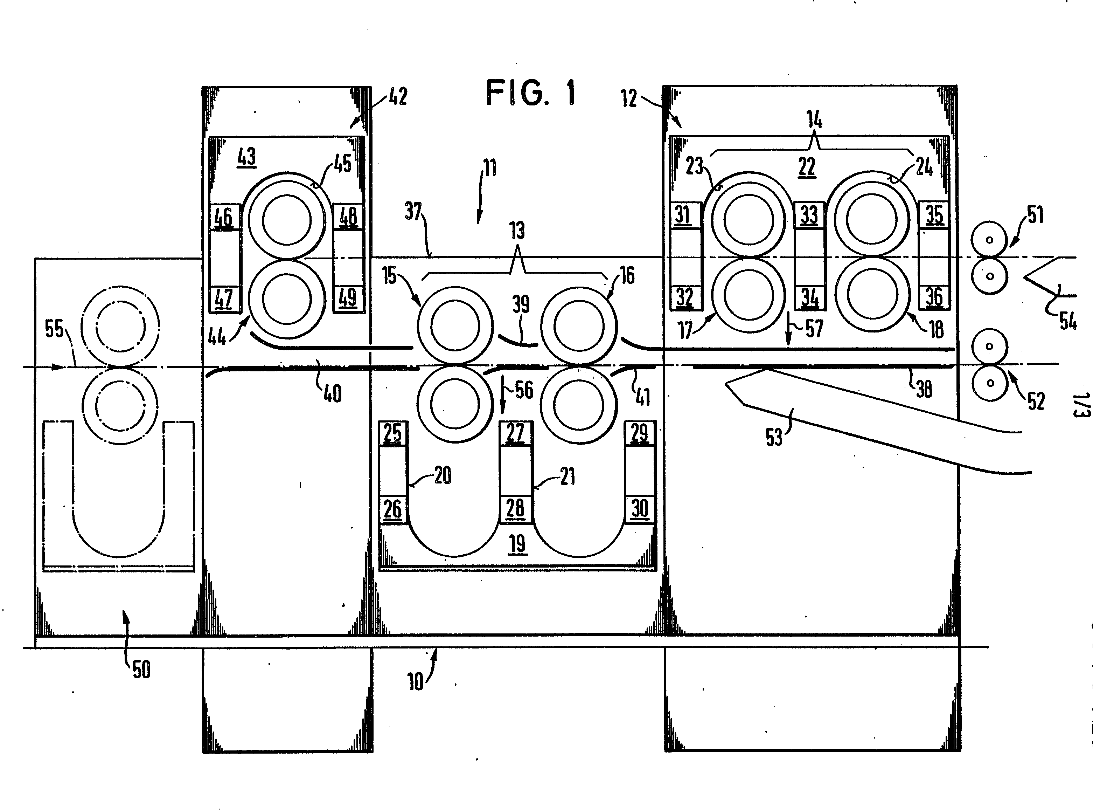

Vor der Schneid- und Rillstation 11 befindet sich eine Rillstation 42, die einen Rahmen 43 enthält ähnlich den Rahmen 19, 22 in den Längsschneid- und Rillstationen 11, 12. Er lagert höhenverstellbar ein Rillwerkzeugwellenpaar 44, das in der in Fig. 1 gezeigten Stellung von der Ausnehmung 45 im Rahmen 43 ausgenommen ist. Verstelleinrichtungen 46 bis 49 sorgen für die Verstellung der Rillwerkzeuge bei einem Formatwechsel.

Eine weitere Rillstation 50 ist vor der Rillstation 42 angeordnet. Sie ist in strichpunktierten Linien dargestellt und gleicht im Aufbau der Rillstation 42, so daß Einzelheiten hierzu nicht näher erläutert werden sollen.

Hinter der hinteren Längsschneid- und Rillstation 12 sind zwei Walzenpaare 51, 52 angeordnet. Der Spalt des Walzenpaares 51 ist der Bearbeitungsebene der Werkzeugwellen 17, 18 ausgerichtet, während der Spalt des Walzenpaares 52 der Führungsebenen der Führung 38 ausgerichtet ist. Die Walzenpaare 51, 52, die Führungs- und Transportfunktion haben, werden ebenfalls mit den Wellenpaaren 17, 18 der Höhe nach verstellt. Weitere Führungselemente sind am Ausgang der Schneid- und Rillstation 11 und der Schneid- und Rillstation 12 angeordnet und mit 53 bzw. 54 bezeichnet.

Eine Wellpappenbahn 55 wird in Richtung des gezeigten Pfeils (linke Seite Fig. 1) in die gezeigte Maschine eingeführt. Die in Fig. 1 gezeigte Ebene der Materialbahn 55 definiert auch gleichzeitig die Arbeitsebene der Maschine. Die Materialbahn 55 wird entlang der Führung 40 zu der im Einsatz befindlichen Schneid- und Rilleinheit 13 geführt, wobei das Rillwellenpaar 15 für eine Rillung und das Schneidwellenpaar 16 für ein entsprechendes Längsschneiden der Materialbahn sorgt. Die so bearbeitete Materialbahn gelangt

0078429

von der Führung 41 in die Führung 38 und über das Walzenpaar 52 zu einer Querschneideinrichtung, die hier nicht
mehr dargestellt ist, in der die bearbeitete Materialbahn
in einzelne Stücke geschnitten wird. Die abgeschnittenen
Stücke werden schließlich gestapelt.

Soll ein Formatwechsel vorgenommen werden, werden die
Wellenpaare 15 und 16 in Richtung des Pfeils 56 nach unten
verstellt. Synchron dazu werden auch die Wellenpaare 17,
18 in Richtung des Pfeils 57 nach unten verstellt. Die Führungen 40, 39, 41 und 38 sowie das Walzenpaar 52 machen diese Bewegung mit, so daß die Materialbahn 55 etwas nach unten
ausgelenkt wird. Auf diese Weise nähert sich die Bearbeitungsebene der Schneid- und Rilleinheit 14 der durch die Materialbahn 55 definierten Arbeitsebene. Bevor jedoch die Schneid-
und Rilleinheit 14 diese erreicht hat, schneidet ein nicht
gezeigter Kurzquerschneider vor der Rillstation 50 die Materialbahn durch. Gleichzeitig erfolgt eine schnelle Verstellung der Einheiten 13 und 14 in die untere Endstellung,
so daß das vordere Ende der abgeschnittenen Materialbahn auf
die Führung 37 läuft und zwischen die Werkzeugwellenpaare
17 und 18, damit an dieser Stelle mit einem neuen Format gerillt und geschnitten werden kann. Die Werkzeuge auf den Werkzeugwellenpaaren
15 und 16 in der nunmehr unteren Position können ihrerseits
verstellt werden, falls dies gewünscht ist.

Wie aus Fig. 1 ersichtlich, ist bei in Fig. 1 gezeigtem Betrieb auch die Rilleinheit 50 im Einsatz. Dieser wird erforderlich, wenn mit einem Rillwerkzeugpaar, hier Wellenpaar 15, nicht die erforderlichen Rillinien geformt werden können. Für einen solchen Fall können die Werkzeugwellen der Rillstation 50 synchron mit den Werkzeugwellen 15 bis 18 in der Höhe verstellt werden. Dies trifft auch auf das Werkzeugwellenpaar 44 zu.

Wie man aus Fig. 1 erkennt, sind die einzelnen Schneid- und Rilleinheiten 13, 14 sowie die Rilleinheiten 42 und 50 hintereinander in Reihe, jedoch unmittelbar benachbart angeordnet. Sie liegen auch nicht übereinander, sondern nur minimal in der Höhe versetzt, wobei der Höhenversatz etwas größer ist als der Durchmesser der Werkzeuge, wie aus Fig. 1 deutlich erkennbar.

Mit der beschriebenen Maschine läßt sich ein Permanentlauf auch bei einem Formatwechsel gewährleisten bei minimaler Beanspruchung der Materialbahn während des Formatwechsels.

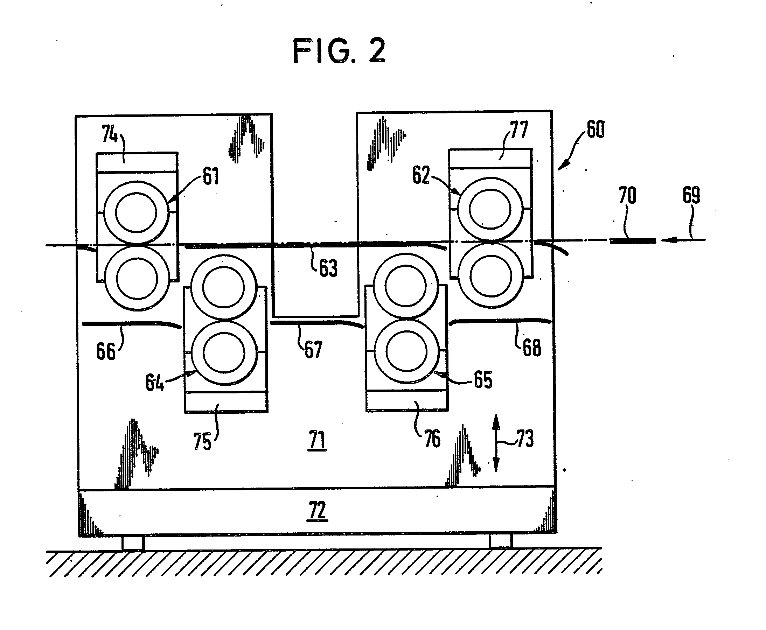

Bei der Ausführungsform nach Fig. 2 ist ein Maschinengestell allgemein mit 60 bezeichnet. Es lagert im Längsabstand ein oberes Messerwellenpaar 61 und ein oberes Rillwellenpaar 62. Zwischen dem Wellenpaar 61, 62 befindet sich eine Führung 63. Das Gestell 60 lagert ferner ein unteres Schneidwellenpaar 64 und ein unteres Rillwellenpaar 65. Vor dem Wellenpaar 64 ist eine Führung 66 angeordnet. Zwischen den Wellenpaaren 64, 65 befindet sich eine Führung 67 und hinter dem Wellenpaar 65 eine Führung 68. Die Führungen 66, 67 und 68 befinden sich in der Arbeitsebene einer durch die Wellenpaare 65 und 64 definiert Schneid- und Rilleinheit. Die Wellenpaare 61 und 62 bilden eine obere Längsschneid- und Rilleinheit, die in der in Fig. 2 dargestellten Lage sich in Arbeitsposition befindet. Eine in Richtung des Pfeils 69 zugeführte Wellpappenbahn 70 wird darin gerillt und längsgeschnitten. In Fig. 2 definiert die Lage der Wellpappenbahn 70 die Arbeitsebene . Ein oberer Abschnitt 71 des Gestells 60 ist gegenüber dem unteren Abschnitt 72 in Richtung des Doppelpfeils 73 höhenverstellbar. In Fig. 2 hat der Gestellabschnitt 71 seine unterste Position, in der sich die Werkzeugwellenpaare 61 und 62 in Arbeitsposition befinden. Bei einem Formtwechsel wird der obere Gestellteil 71 durch eine nicht gezeigte Hubvorrichtung angehoben, so daß die Wellpappenbahn 70 etwas nach oben ausgelenkt sich durch die Maschine bewegt. Wird ein vor der Maschine angeordneter Kurzquerschneider betätigt, läuft das hintere Ende der abgeschnittenen Materialbahn noch durch die Werkzeugwellenpaare 61 und 62, während die Vorderkante der nachfolgenden Wellpappenbahn bereits auf die inzwischen weit genug angehobene Führung 68 aufläuft, um durch die Werkzeugwellenpaare 65 und 64 hindurchzutreten und bearbeitet zu werden. Ein Formatwechsel in umgekehrter Richtung erfolgt auf gleiche Weise.

Es versteht sich, daß die Werkzeuge auf den Werkzeugwellen wiederum in geeigneter Weise von Hand oder automatisch verstellt werden können. Zugehörige Verstellwagen sind bei 74, 75, 76 und 77 angedeutet.

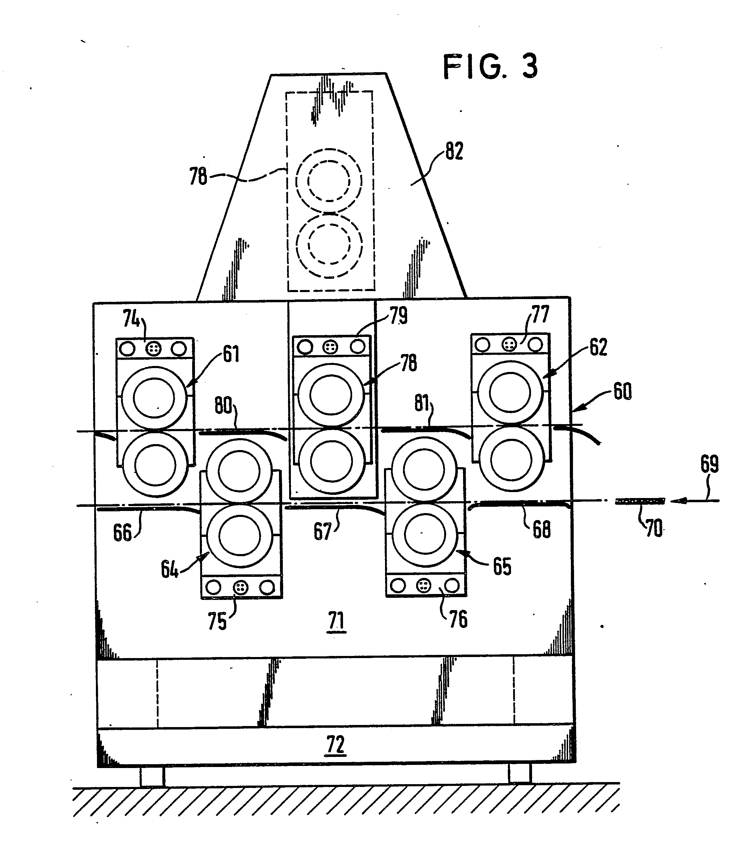

Bei der Ausführungsform nach Fig. 3 ist im wesentlichen die gleiche Anordnung wie in Fig. 2 dargestellt, so daß gleiche Teile mit gleichen Bezugszeichen versehen sind. In der Mitte des Gestells 60 zwischen den Werkzeugwellenpaaren 61, 62 bzw. den Werkzeugwellenpaaren 64, 65 ist ein Rillwellenpaar 78 drehbar, jedoch stationär gelagert und dadurch auf gleiche Weise mit dem oberen Gestellabschnitt 71 verstellbar wie die anderen Werkzeugwellenpaare. Ein bei 79 angedeuteter Wagen dient zur Verstellung der Rillwerkzeuge. Wegen der zusätz- lichen Rilleinheit 78 ist die Führung 63 durch einzelne Führungen 80 und 81 ersetzt.

Wie in Fig. 3 gestrichelt angedeutet, kann jedoch die Rilleinheit 78 separat in der Höhe verfahren werden und gelangt dadurch zu einem oberen Gestellabschnitt 82, wodurch die Rilleinheit 78 in Ruheposition gebracht ist. Im übrigen ist in Fig. 3 der in Verbindung mit Fig. 2 beschriebene Formatwechsel vollzogen, und die Werkzeugwellenpaare 64 und 65 bearbeiten die Wellenbahn 70, die nach wie vor in gleicher Höhe zugeführt wird. Der obere Gestellabschnitt 71 befindet sich dabei in der obersten Position.

A n s p r ü c h e :

1. Maschine zum Längsschneiden und -rillen einer kontinuierlich ohne Unterbrechung zulaufenden Materialbahn, insbesondere Wellpappe, mit einem Kurzquerschneider und einer
nachgeordneten Längsschneid- und Rilleinrichtung, die
mindestens zwei in unterschiedlicher Höhe angeordnete
und höhenverstellbare Längsschneid- und Rilleinheiten
mit getrennten Schneid- und Rillwerkzeugen enthält, denen
die Vorderkante der vom Kurzquerschneider durchtrennten
Materialbahn wahlweise zuführbar ist, dadurch gekennzeichnet,
daß die Längsschneid- und Rilleinheiten (13, 14) in Arbeitsrichtung hintereinander liegen, oberhalb der unteren und
unterhalb der oberen Längsschneid- und Rilleinheit eine
Bahnführung (37  bzw. 38) mit der zugeordneten Einheit
verbunden ist dergestalt, daß jeweils die Bahnführung einer Einheit ständig mit der Bearbeitungsebene der anderen
Einheit ausgerichtet ist und die Längsschneid- und Rilleinheiten (13, 14) zur synchronen Höhenverstellung gekoppelt sind.

2. Maschine nach Anspruch 1, dadurch gekennzeichnet, daß
die Längsschneid- und Rilleinheiten (13, 14) im Maschinenrahmen (19, 22) angeordnet sind, die einander unmittelbar benachbart sind.

3. Maschine nach Anspruch 1 oder 2, dadurch gekennzeichnet, daß vor der vorderen Längsschneid- und Rilleinheit (13) eine feste zur Bearbeitungsebene der Werkzeuge ausgerichtete Führung (40) mit der Einheit (13) verbunden ist.

4. Maschine nach einem der Ansprüche 1 bis 3, dadurch gekennzeichnet, daß an den Ausgang der hinteren Längsschneid- und Rilleinheit (14) zwei Walzenpaare (51, 52) angebracht sind, wobei der Spalt eines Walzenpaares (51) zur Bearbeitungsebene der Einheit (14) und der Spalt des anderen Walzenpaares (52) zur Ebene der zugeordneten Bahnführung (38) ausgerichtet ist.

5. Maschine nach einem der Ansprüche 1 bis 4, dadurch gekennzeichnet, daß der Höhenabstand zwischen den Bearbeitungsebenen der Längsschneid- und Rilleinheiten (13, 14) etwas größer ist als der Durchmesser der Schneid- und Rillwerkzeuge.

6. Maschine nach einem der Ansprüche 1 bis 5, dadurch gekennzeichnet, daß mindestens eine höhenverstellbare Rilleinheit (44) der vorderen Längsschneid- und Rilleinheit (13) vorgeordnet ist, deren Bearbeitungsebene zu einer Bearbeitungsebene der beiden Längsschneid- und Rilleinheiten (13, 14) ausgerichtet ist.

7. Maschine nach einem der Ansprüche 1 bis 6, dadurch gekennzeichnet, daß die Längsschneid- und Rilleinheiten(61, 62,
   64, 65) in einem gemeinsamen Gestell (60) gelagert sind,
   das mittels einer Hubvorrichtung höhenverstellbar ist.

8. Maschine nach Anspruch 7, dadurch gekennzeichnet, daß
   Schneid- und Rillwerkzeuge (61, 62) der oberen Einheit
   in Arbeitsrichtung beabstandet sind und die Schneid- und
   Rillwerkzeuge (64, 65) der unteren Einheit zwischen diesen angeordnet sind.

9. Maschine nach Anspruch 8, dadurch gekennzeichnet, daß
   eine weitere Rilleinheit (78) zwischen den oberen Schneid-
   und Rillwerkzeugen (61, 62) angeordnet ist mit zu diesen
   ausgerichteter Bearbeitungsebene, vorzugsweise auch zwischen den unteren Schneid- und Rillwerkzeugen (64, 65).

# FIG. 1

00784429

1/3

# FIG. 2

0078429

3/3

FIG. 3